# EUROPÄISCHE PATENTSCHRIFT

(11) **EP 3 999 806 B1**
(45) Veröffentlichungstag und Bekanntmachung des Hinweises auf die Patenterteilung: **03.09.2025**
(21) Anmeldenummer: 20740313.0
(22) Anmeldetag: 14.07.2020
(51) Int. Cl.: G01C 21/32, G01C 21/00, G01C 21/30, G01S 5/02

(54) **VERFAHREN UND KOMMUNIKATIONSSYSTEM ZUR UNTERSTÜTZUNG EINER WENIGSTENS TEILWEISE AUTOMATISCHEN FAHRZEUGSTEUERUNG**
METHOD AND COMMUNICATION SYSTEM FOR SUPPORTING AN AT LEAST PARTIALLY AUTOMATIC VEHICLE CONTROL
PROCÉDÉ ET SYSTÈME DE COMMUNICATION POUR SOUTENIR UNE COMMANDE DE VÉHICULE AU MOINS PARTIELLEMENT AUTOMATIQUE

(30) Priorität: 15.07.2019 DE 102019119095
(43) Veröffentlichungstag der Anmeldung: 25.05.2022
(73) Patentinhaber: VOLKSWAGEN AKTIENGESELLSCHAFT, 38440 Wolfsburg (DE); MAN Truck & Bus SE, 80995 München (DE)
(72) Erfinder: RECH, Bernd, 38556 Bokensdorf (DE); HUNGAR, Constanze, 38100 Braunschweig (DE); WILBERS, Daniel, 38440 Wolfsburg (DE); KOCH, Niklas, 38448 Wolfsburg (DE); JÜRGENS, Stefan, 38106 Braunschweig (DE); MERFELS, Christian, 38102 Braunschweig (DE)
(74) Vertreter: Hofstetter, Schurack & Partner
(86) Internationale Anmeldenummer: PCT/EP2020/069869
(87) Internationale Veröffentlichungsnummer: WO 2021/009165

(56) Entgegenhaltungen:
- EP-A1- 3 232 159
- EP-A1- 3 926 304
- DE-A1- 102012 224 110
- DE-A1- 102016 205 964

## Beschreibung

Die vorliegende Erfindung betrifft ein Verfahren zur Bereitstellung eines Informationssignals zur wenigstens teilweise automatischen Fahrzeugsteuerung, wobei mittels eines Umfeldsensorsystems eines Kraftfahrzeugs Messdaten einer Umgebung des Kraftfahrzeugs erzeugt werden. Die Erfindung betrifft ferner ein Verfahren zur wenigstens teilweise automatischen Fahrzeugsteuerung, ein Kommunikationssystem sowie ein Computerprogramm.

Automatisches oder teilautomatisches Fahren ist in der Regel auf aktuelles hochauflösendes Kartenmaterial, HD-Karten genannt, angewiesen. Konzeptbedingt veralten diese Karten jedoch, wenn sich Situationen in der Umgebung verändern.

Zudem ist ein Informationsaustausch zwischen verschiedenen Kraftfahrzeugen dadurch begrenzt, dass diese teilweise unterschiedliche Kartensysteme, beispielsweise Karten unterschiedlicher Hersteller, verwenden und dementsprechend Fehler bei der örtlichen Zuordnung der übertragenen Informationen resultieren.

Im Dokument DE 10 2014 217 847 A1 ist ein Fahrerassistenzsystem zum Aktualisieren einer digitalen Karte beschrieben. Dabei wird eine Abweichung zwischen einer von der fahrzeuginternen Umfeldsensoreinrichtung erfasste Relativposition einer Landmarke und der aus der digitalen Karte erhältlichen Relativposition bestimmt. Diese Abweichung wird durch Kommunikation zwischen benachbarten Fahrzeugen verifiziert und danach zur Aktualisierung der digitalen Karte verwendet. Das Dokument EP 3 232 159 A1 offenbart eine Fahrzeugpositionierung, wenn eine Landmarke nicht im Sichtfeld der Fahrzeugkamera liegt.

Vor diesem Hintergrund ist es eine Aufgabe der vorliegenden Erfindung, ein verbessertes Konzept zur Unterstützung einer wenigstens teilweise automatischen Fahrzeugsteuerung anzugeben, durch das Fehler aufgrund unterschiedlicher Kartenmaterialien reduziert werden können.

Erfindungsgemäß wird diese Aufgabe durch den jeweiligen Gegenstand der unabhängigen Ansprüche gelöst. Vorteilhafte Weiterbildungen und weitere Ausführungsformen sind Gegenstand der abhängigen Ansprüche.

Das verbesserte Konzept beruht auf der Idee, aus den Messdaten eines Kraftfahrzeugs eine Relativposition eines Objekts bezüglich einer Landmarke zu bestimmen und ein Informationssignal abhängig von der Relativposition bereitzustellen.

Gemäß einem ersten unabhängigen Aspekt des verbesserten Konzepts wird ein Verfahren zur Bereitstellung eines Informationssignals zur wenigstens teilweise automatischen Fahrzeugsteuerung angegeben. Dabei werden mittels eines Umfeldsensorsystems eines Kraftfahrzeugs Messdaten einer Umgebung des Kraftfahrzeugs erzeugt. Mittels einer Recheneinheit des Kraftfahrzeugs werden basierend auf den Messdaten ein Objekt und eine Landmarke in der Umgebung identifiziert. Mittels der Recheneinheit wird basierend auf den Messdaten eine erste Relativposition des Objekts bezüglich der Landmarke, insbesondere bezüglich einer Position der Landmarke, insbesondere bezüglich einer Position eines Punkts der Landmarke, bestimmt. Mittels einer Kommunikationsschnittstelle des Kraftfahrzeugs wird das Informationssignal abhängig von der ersten Relativposition erzeugt, um das Informationssignal dadurch bereitzustellen.

Bei dem Umfeldsensorsystem handelt es sich um ein Sensorsystem mit einem oder mehreren Sensoren, durch die die Umgebung oder Eigenschaften der Umgebung abgebildet oder dargestellt werden können. Dazu kann das Umfeldsensorsystem beispielsweise ein Radarsystem, ein optisches Sensorsystem, beispielsweise ein passives optisches Sensorsystem, insbesondere eine Kamera, oder ein aktives optisches Sensorsystem, beispielsweise einen Laserscanner oder ein Lidarsystem, beinhalten. Die Abbildung der Umgebung beziehungsweise der Eigenschaften der Umgebung erfolgt insbesondere in Form eines oder mehrerer Kamerabilder und/oder einer oder mehrerer Punktwolken von Abtastpunkten. Eine Punktwolke kann dabei als Menge dreidimensionaler Koordinatentupel entsprechender Abtastpunkte der Umgebung verstanden werden. Punktwolken werden beispielsweise mittels eines Radarsystems oder eines aktiven optischen Sensorsystems erzeugt.

Die Messdaten können insbesondere Daten beinhalten, die zu unterschiedlichen Zeitpunkten aufgenommen wurden. Beispielsweise können die Messdaten zu unterschiedlichen Zeitpunkten aufgenommene Punktwolken und/oder Kamerabilder beinhalten.

Die Umgebung des Kraftfahrzeugs kann beispielsweise Teile einer Fahrbahn, auf der sich das Kraftfahrzeug befindet, sowie weitere statische und/oder dynamische Objekte beinhalten, die sich in einem oder mehreren Blickbereichen, FOV, des Umfeldsensorsystems befinden.

Als Landmarke kann hier und im Folgenden insbesondere ein Merkmal in der Umgebung verstanden werden, das charakteristische, messbare, ortsfeste und zeitlich unveränderliche Eigenschaften aufweist oder eine Ansammlung solcher Merkmale beziehungsweise einen Gegenstand mit einem oder mehreren solcher Merkmale.

Als Landmarken kommen beispielsweise Schilder, Verkehrsschilder, Säulen, Pfosten, Masten, Pfähle, Fahrbahnmarkierungen, Fahrbahnbegrenzungen, Gebäude und so weiter in Frage.

Bei dem Objekt kann es sich um ein statisches oder um ein dynamisches Objekt in der Umgebung handeln. Insbesondere handelt es sich bei dem Objekt jedoch nicht um eine Landmarke.

Bei der ersten Relativposition handelt es sich insbesondere um Koordinaten eines ersten Punktes des Objekts bezüglich eines Punktes der Landmarke, also insbesondere in einem Koordinatensystem definiert durch den Punkt der Landmarke, bei dem der Punkt der Landmarke also den Koordinatenursprung festlegt oder im Koordinatenursprung liegt. Die erste Relativposition kann also als Ortsvektor des ersten Punktes in dem Koordinatensystem der Landmarke oder als Verbindungsvektor von dem Punkt der Landmarke zu dem ersten Punkt des Objekts verstanden werden.

Bei dem ersten Punkt des Objekts handelt es sich insbesondere um einen Punkt auf dem Objekt oder um einen Punkt auf einer geometrischen Figur, welche das Objekt wenigstens näherungsweise beschreibt.

Die Position des Punktes der Landmarke kann beispielsweise aus den Messdaten bestimmt werden oder bezüglich eines Referenzkoordinatensystems vorgegeben sein, insbesondere gespeichert sein, beispielsweise auf der Recheneinheit oder einer Speichereinheit der Recheneinheit oder des Kraftfahrzeugs.

Insbesondere kann das Kraftfahrzeug eine Karte, insbesondere digitale Karte, aufweisen. Die Karte weist ein Kartenkoordinatensystem auf, welches beispielsweise als das Referenzkoordinatensystem dienen kann. Die Karte kann dabei als Datenbank verstanden werden, in der eine Vielzahl von Positionsdaten gespeichert ist, insbesondere den Positionen entsprechende Koordinaten in dem Kartenkoordinatensystem. Beispielsweise können Koordinaten des Punktes der Landmarke in der Karte gespeichert sein.

Das Informationssignal kann beispielsweise eine V2V- oder V2X-Nachricht sein oder beinhalten oder Teil einer solchen Nachricht sein. V2V steht dabei für Fahrzeug-zu-Fahrzeug (englisch: "Vehicle to Vehicle") und V2X steht für Fahrzeug-zu-Infrastruktur oder Fahrzeug-zu-X (englisch: "Vehicle to X").

Bei dem Informationssignal handelt es sich insbesondere um ein elektromagnetisches Signal.

Beispielsweise enthält das Informationssignal als Information eine Information über die Existenz des Objekts und die erste Relativposition. Optional kann das Informationssignal Koordinaten des ersten Punkts des Objekts in dem Kartenkoordinatensystem und/oder die Koordinaten der Landmarke in dem Kartenkoordinatensystem beinhalten. Optional kann das Informationssignal einen oder mehrere entsprechende Kennwerte für eine Genauigkeit der Koordinaten oder der ersten Relativposition beinhalten.

Die Informationen, die mittels des Informationssignals bereitgestellt werden, können zur wenigstens teilweise automatischen Fahrzeugsteuerung eines weiteren Kraftfahrzeugs verwendet werden.

Gemäß dem verbesserten Konzept wird die Position der Landmarke als fest vorgegeben und unveränderlich angenommen und dient effektiv als Referenz für die Position des Objekts, indem die erste Relativposition bezüglich der Landmarke angegeben wird. Dies hat den Vorteil, dass die Position der Landmarke durch das weitere Kraftfahrzeug selbst unabhängig bestimmt werden kann, beispielsweise durch eigene Messungen oder Abbildungen des Umfelds oder durch Auslesen einer entsprechenden weiteren Karte des weiteren Kraftfahrzeugs. Dadurch, dass das Informationssignal die Position des Objekts als erste Relativposition bezüglich der Landmarke bereitstellt, werden Fehler, die sich aufgrund von Abweichungen der Karte von der weiteren Karte ergeben, vermieden. Mit Vorteil kann das weitere Kraftfahrzeug das Informationssignal und daher die erste Relativposition des Objekts auch nutzen, wenn es selbst das Objekt nicht, noch nicht, nicht mit ausreichender Genauigkeit oder nur unvollständig erfassen kann, beispielsweise weil es sich noch zu weit von dem Objekt entfernt befindet.

Das verbesserte Konzept ist mit Vorteil auch nicht auf die Bestimmung der Position des Kraftfahrzeugs basierend auf Satellitendaten angewiesen. Da entsprechende Positionierungssysteme auf Satellitenbasis regelmäßig vergleichsweise unpräzise oder aber sehr kostenintensiv sind, führt dies zu entsprechenden Vorteilen des verbesserten Konzepts.

Zum Identifizieren der Landmarke erkennt die Recheneinheit beispielsweise basierend auf den Messdaten, dass sich möglicherweise eine oder mehrere potentielle Landmarken in der Umgebung befinden. Die Messdaten werden entsprechend mit auf der Karte gespeicherten Informationen verglichen, um festzustellen, ob es sich bei einer der potentiellen Landmarken tatsächlich um eine Landmarke handelt. Damit kann die Position des Kraftfahrzeugs basierend auf den in der Karte gespeicherten Positionen der Landmarke und den Messdaten bestimmt werden. Außerdem kann mittels der Recheneinheit bestimmt werden, ob sich eine Abweichung der gemessenen Position der Landmarke von einer erwarteten beziehungsweise in der Karte gespeicherten Position der Landmarke gegeben ist. Falls eine signifikante Abweichung identifiziert wird, wird diese Landmarke nicht zur Erzeugung des Informationssignals verwendet.

Die beschriebenen Schritte des Verfahrens zur Bereitstellung des Informationssignals nach dem verbesserten Konzept können beispielsweise für mehrere Landmarken in der Umgebung wiederholt werden. Insbesondere kann eine erste Relativposition des Objekts dann bezüglich mehrerer oder aller identifizierter Landmarken in der Umgebung bestimmt werden und das Informationssignal basierend auf den entsprechenden ersten Positionen des Objekts erzeugt werden. Dadurch kann eine höhere Zuverlässigkeit beziehungsweise eine bessere Verifizierbarkeit und/oder Plausibilisierbarkeit des Informationssignals zur Fahrzeugsteuerung ermöglicht werden.

Gemäß zumindest einer Ausführungsform des Verfahrens nach dem verbesserten Konzept beinhalten die Messdaten wenigstens zwei Untermengen von Messdaten. Die wenigstens zwei Untermengen von Messdaten entsprechen jeweils Messdaten, die zu unterschiedlichen Zeitpunkten beziehungsweise während unterschiedlicher Zeiträume mittels des Umfeldsensorsystems erfasst wurden und dementsprechend insbesondere unterschiedlichen Relativpositionen des Kraftfahrzeugs beziehungsweise des Umfeldsensorsystems bezüglich des Objekts entsprechen.

Die beschriebenen Schritte des Verfahrens nach dem verbesserten Konzept, insbesondere das Identifizieren des Objekts und der Landmarke und das Bestimmen der ersten Relativposition, werden für jede Untermenge durchgeführt. Das Informationssignal wird dann basierend auf den entsprechenden ersten Relativpositionen, die auf Grundlage der einzelnen Untermengen erzeugt wurden, erzeugt. Aufgrund der unterschiedlichen Perspektiven, aus denen das Umfeldsensorsystem das Objekt und die Landmarke erfasst, wird eine erhöhte Genauigkeit erzielt.

Gemäß zumindest einer Ausführungsform wird mittels der Recheneinheit basierend auf Kartendaten der Karte des Kraftfahrzeugs und basierend auf den Messdaten ein Vergleich durchgeführt und mittels der Recheneinheit wird das Objekt basierend auf einem Ergebnis des Vergleichs identifiziert, um das Objekt basierend auf den Messdaten zu identifizieren.

Bei der Karte handelt es sich insbesondere um eine digitale Karte, also um eine Datenbank, auf der die Kartendaten und gegebenenfalls weitere Kartendaten gespeichert sind. Die Karte kann insbesondere als HD-Karte (englisch: "High Definition", HD) bezeichnet werden. Die Bezeichnung HD-Karte drückt dabei aus, dass die Kartendaten mit einer räumlichen Auflösung im Bereich von einem oder mehreren Zentimetern auf der Karte gespeichert sind. Die Karte kann beispielsweise auf der Recheneinheit oder auf einer Speichereinheit des Kraftfahrzeugs oder der Recheneinheit gespeichert sein.

Die Kartendaten beinhalten insbesondere entsprechende Koordinaten des Objekts und gegebenenfalls weiterer Objekte sowie der Landmarken in dem Kartenkoordinatensystem.

Um den Vergleich durchzuführen, werden mittels der Recheneinheit insbesondere die Messdaten oder von den Messdaten abhängige Daten mit den Kartendaten oder mit von den Kartendaten abhängigen Daten verglichen.

Beispielsweise können aus den Kartendaten Solldaten abgeleitet werden und diese mit den Messdaten verglichen werden. Alternativ oder zusätzlich können aus den Messdaten abgeleitete Daten mit den Kartendaten verglichen werden.

Beinhaltet das Ergebnis des Vergleichs die Information, dass keine signifikante Abweichung der Messdaten von gemäß der Kartendaten erwarteten Daten vorliegt, so wurde das Objekt nicht identifiziert. Liegt dagegen eine entsprechende signifikante Abweichung vor, so wurde das Objekt identifiziert. Was als signifikant betrachtet werden kann, kann beispielsweise in Form eines oder mehrerer Toleranzbereiche definiert sein.

Nachdem die Kartendaten aufgrund der großen Datenmenge, die die Karte speichert, nicht mit hoher Frequenz aktualisiert werden können, kann mittels des verbesserten Konzepts eine entsprechende Abweichung in Form der ersten Relativposition quantifiziert werden und in Form des Informationssignals beispielsweise weiteren Kraftfahrzeugen und/oder einem Backendserver oder einem sonstigem stationären Computersystem zur Verfügung gestellt werden, um eine wenigstens teilweise automatische Fahrzeugsteuerung des weiteren Kraftfahrzeugs zu ermöglichen.

Gemäß zumindest einer Ausführungsform werden Koordinaten des Objekts, insbesondere des ersten Punkts des Objekts, in einem vorgegebenen Sensorkoordinatensystem, insbesondere des Umfeldsensorsystems, abhängig von den Messdaten bestimmt. Koordinaten der Landmarke, insbesondere des Punkts der Landmarke, werden in dem Sensorkoordinatensystem abhängig von den Messdaten mittels der Recheneinheit bestimmt. Die erste Relativposition wird mittels der Recheneinheit abhängig von den Koordinaten des Objekts in dem Sensorkoordinatensystem und abhängig von den Koordinaten der Landmarke in dem Sensorkoordinatensystem bestimmt.

Bei dem Sensorkoordinatensystem handelt es sich insbesondere um ein mit dem Umfeldsensorsystem starr verbundenes Koordinatensystem, mit anderen Worten um ein sensorfestes Koordinatensystem. Beispielsweise können Achsen des Sensorkoordinatensystems durch eine optische Achse des Umfeldsensorsystems und darauf senkrecht stehenden Achsen definiert sein. Durch die starre Verbindung des Sensorkoordinatensystems mit dem Umfeldsensorsystem ist das Sensorkoordinatensystem insbesondere auch starr mit dem Kraftfahrzeug verbunden.

Die Koordinaten des Objekts beziehungsweise der Landmarke können auch als jeweilige Ortsvektoren in dem Sensorkoordinatensystem verstanden werden.

Die erste Relativposition des Objekts kann beispielsweise als Differenz des Ortsvektors des ersten Punkts des Objekts in dem Sensorkoordinatensystem und des Ortsvektors der Landmarke beziehungsweise des Punkts der Landmarke in dem Sensorkoordinatensystem berechnet werden.

Je nach Art der Messdaten und des Umfeldsensorsystems kann es die Genauigkeit der Relativposition erhöhen, diese direkt in den Sensorkoordinaten zu berechnen.

Gemäß zumindest einer Ausführungsform werden mittels der Recheneinheit Koordinaten des Objekts in dem Kartenkoordinatensystem des Kraftfahrzeugs abhängig von den Messdaten bestimmt. Koordinaten des Umfeldsensorsystems werden in dem **Kartenkoordinatensystem** abhängig von den Messdaten bestimmt. Die erste Relativposition wird mittels der Recheneinheit abhängig von den Koordinaten des Objekts in dem Kartenkoordinatensystem und abhängig von den Koordinaten des Umfeldsensorsystems in dem Kartenkoordinatensystem bestimmt.

Insbesondere werden die Koordinaten des Objekts in dem Kartenkoordinatensystem abhängig von den Messdaten und den Kartendaten bestimmt. Insbesondere werden die Koordinaten des Objekts in dem Kartenkoordinatensystem abhängig von den Koordinaten der Landmarke in dem Kartenkoordinatensystem, den Koordinaten des Objekts in dem Sensorkoordinatensystem und den Koordinaten des Umfeldsensorsystems in dem Kartenkoordinatensystem bestimmt. Beispielsweise kann der Ortsvektor des ersten Punkts des Objekts in dem Kartenkoordinatensystem Q_{K} gegeben sein als Q_{K} = L_{K} - L_{S} + O_{S}, wobei L_{K} den Ortsvektor des Punkts der Landmarke in dem Kartenkoordinatensystem bezeichnet, L_{S} den Ortsvektor der Landmarke in dem Sensorkoordinatensystem und O_{S} den Ortsvektor des Punkt des Objekts in dem Sensorkoordinatensystem.

Die Koordinaten des Umfeldsensorsystems in dem Kartenkoordinatensystem werden insbesondere abhängig von den Messdaten und den Kartendaten bestimmt. Insbesondere werden die Koordinaten des Umfeldsensorsystems in dem Kartenkoordinatensystem abhängig von den Koordinaten der Landmarke in dem Kartenkoordinatensystem und der Landmarke in dem Sensorkoordinatensystem bestimmt. Beispielsweise ist der Ortsvektor des Umfeldsensorsystems in dem Kartenkoordinatensystem S_{K} gegeben durch Sₖ = L_{K} -L_{S}.

Je nach Art der Rohdaten und des Umfeldsensorsystems kann der scheinbare Umweg der Berechnung der ersten Relativposition über die Messdaten und die Kartendaten genauer sein.

Der Verbindungsvektor V des Punkts der Landmarke zu dem ersten Punkt des Objekts ist insbesondere gegeben durch V = Q_{K} - Sₖ -L_{S}.

Gemäß zumindest einer Ausführungsform wird mittels der Recheneinheit basierend auf den Messdaten eine geometrische Figur zur näherungsweisen Beschreibung des Objekts bestimmt und eine Relativposition eines ersten Punkts der geometrischen Figur bezüglich der Landmarke wird als Relativposition des Objekts bestimmt.

Mit anderen Worten handelt es sich bei dem ersten Punkt des Objekts in solchen Ausführungsformen um den ersten Punkt der geometrischen Figur.

Der erste Punkt der geometrischen Figur kann auf dem Objekt liegen oder näherungsweise auf dem Objekt.

Bei der geometrischen Figur kann es sich um eine Kurve in einer Ebene, also eine ebene Kurve, handeln, welche um das Objekt herum verläuft und/oder um eine Projektion des Objekts in die Ebene herum verläuft und die Projektion einschließt. Bei der Ebene kann es sich beispielsweise um eine Ebene parallel zu einem Untergrund des Kraftfahrzeugs, beispielsweise parallel zu einer Fahrbahn, handeln.

Bei der ebenen Kurve kann es sich beispielsweise um ein Polygon, ein Rechteck, einen Kreis, eine Ellipse, ein Oval oder eine durch eine oder mehrere Polynome beschriebene Kurve handeln.

Bei der ebenen Kurve kann es sich insbesondere um eine Einhüllende der Projektion des Objekts in die Ebene handeln.

Bei der geometrischen Figur kann es sich auch um eine räumliche, also dreidimensionale, Kurve handeln, die um das Objekt herum verläuft.

Bei der geometrischen Figur kann es sich auch um einen dreidimensionalen Körper handeln, der das Objekt einschließt, beispielsweise um eine Bounding Box.

Die geometrische Figur kann als Näherung des Objekts verstanden werden. Statt direkt Rohdaten, also die Messdaten, zu verarbeiten, welche das Objekt mehr oder weniger exakt darstellen, kann ein entsprechender Rechenaufwand durch Annäherung des Objekts mittels der geometrischen Figur reduziert werden.

Insbesondere kann die geometrische Figur durch eine relativ geringe Anzahl von Punkten definiert werden.

Die geometrische Figur weist insbesondere mindestens zwei Punkte auf, die als Stützstellen betrachtet werden können und den ersten Punkt der geometrischen Figur beinhalten. Typischerweise kann die geometrische Figur eine Anzahl von Punkten oder Stützstellen in der Größenordnung von einigen oder einigen zehn Punkten beinhalten.

Das Bestimmen der geometrischen Figur beinhaltet insbesondere das Berechnen von Koordinaten der mindestens zwei Punkte, beispielsweise im Sensorkoordinatensystem, welche beispielsweise Eckpunkte der Figur oder sonstige Stützstellen der Figur sein können.

Durch die Berechnung der Punkte der geometrischen Figur kann insbesondere die Ausdehnung des Objekts abgeschätzt werden, ohne eine exakte Darstellung des Objekts mittels des Informationssignals übertragen zu müssen.

Gemäß zumindest einer Ausführungsform wird mittels der Recheneinheit basierend auf den Messdaten eine zweite Relativposition des Objekts bestimmt. Mittels der Kommunikationsschnittstelle wird das Informationssignal abhängig von der ersten und der zweiten relativen Position des Objekts erzeugt.

Bei der zweiten Relativposition handelt es sich insbesondere um eine Relativposition des Objekts bezüglich der Landmarke oder bezüglich des ersten Punkts des Objekts.

Gemäß zumindest einer Ausführungsform ist die zweite Relativposition eine Relativposition eines zweiten Punkts des Objekts, es handelt sich dabei also um Koordinaten des zweiten Punktes des Objekts bezüglich des Punktes der Landmarke oder bezüglich des ersten Punktes des Objekts.

Gemäß zumindest einer Ausführungsform ist der zweite Punkt des Objekts ein zweiter Punkt der geometrischen Figur.

Durch die Bereitstellung der ersten und der zweiten Relativposition in Form des Informationssignals werden mehr Informationen zur Verfügung gestellt. Dadurch ergeben sich vielfältigere Möglichkeiten zur wenigstens teilweisen automatischen Fahrzeugsteuerung basierend auf dem Informationssignal. Eine höhere Zuverlässigkeit, eine bessere Verifizierbarkeit und Plausibilisierbarkeit wird erreicht.

Gemäß zumindest einer Ausführungsform wird mittels der Recheneinheit dem Objekt basierend auf den Messdaten eine Klasse aus wenigstens zwei vorgegebenen Klassen zugeordnet. Mittels der Kommunikationsschnittstelle wird das Informationssignal abhängig von der dem Objekt zugeordneten Klasse erzeugt.

Um dem Objekt die Klasse zuzuordnen, kann die Recheneinheit insbesondere eine Bildanalyse, beispielsweise mittels eines Klassifikatorsoftwaremoduls oder eines künstlichen neuronalen Netzwerkes, durchführen.

Das Zuordnen der Klasse zu dem Objekt kann beispielsweise als Zuordnen von semantischen Informationen zu dem Objekt verstanden werden. Beispielsweise können die semantischen Informationen die Art oder Größe oder sonstige Eigenschaften des Objekts betreffen.

Insbesondere kann es sich bei dem Objekt um ein statisches oder ein dynamisches Objekt handeln. Bei dem Objekt kann es sich beispielsweise um eine Baustelle, ein anderes Fahrzeug, beispielsweise einen Lkw, insbesondere ein stehendes Fahrzeug, eine Fahrbahnmarkierung, eine Fahrbahnbegrenzung, ein Gebäude oder dergleichen handeln.

Durch die Berücksichtigung der semantischen Informationen in dem Informationssignal werden vielfältigere Möglichkeiten zur Steuerung des weiteren Kraftfahrzeugs ermöglicht. Es wird eine höhere Zuverlässigkeit, eine bessere Verifizierbarkeit und Plausibilisierbarkeit erzielt.

Gemäß zumindest einer Ausführungsform wird das Informationssignal mittels der Kommunikationsschnittstelle an das weitere Kraftfahrzeug übertragen, insbesondere direkt.

Insbesondere wird das Informationssignal mittels der Kommunikationsschnittstelle an eine weitere Kommunikationsschnittstelle des weiteren Kraftfahrzeugs übertragen und wird das Informationssignal von der weiteren Kommunikationsschnittstelle empfangen.

Die Übertragung findet insbesondere in Form elektromagnetischer Signale, insbesondere als V2V- oder V2X-Nachricht statt.

Das übertragene Informationssignal kann durch das weitere Kraftfahrzeug zur wenigstens teilweisen automatischen Steuerung des weiteren Kraftfahrzeugs verwendet werden.

Gemäß zumindest einer Ausführungsform wird das Informationssignal mittels der Kommunikationsschnittstelle an ein Servercomputersystem, insbesondere eine Kommunikationsschnittstelle des Servercomputersystems, übertragen und ein weiteres Informationssignal wird mittels des Servercomputersystems abhängig von dem Informationssignal erzeugt und an das weitere Kraftfahrzeug, insbesondere die weitere Kommunikationsschnittstelle des weiteren Kraftfahrzeugs, übertragen.

Bei dem weiteren Kraftfahrzeug, welches das weitere Informationssignal empfängt, kann es sich insbesondere um dasselbe weitere Kraftfahrzeug handeln, welches das Informationssignal empfängt, oder um ein anderes Kraftfahrzeug.

In solchen Ausführungsformen kann das weitere Kraftfahrzeug das weitere Informationssignal zur wenigstens teilweise automatischen Steuerung des weiteren Kraftfahrzeugs verwenden.

Insbesondere kann ein Inhalt des weiteren Informationssignals gleich einem Inhalt des Informationssignals sein.

Durch die Übertragung des Informationssignals an das Servercomputersystem und die Weiterleitung der entsprechenden Informationen durch das Servercomputersystem an das weitere Kraftfahrzeug mittels des weiteren Informationssignals kann die entsprechende Information auch außerhalb eines Sendebereichs des Kraftfahrzeugs bereitgestellt werden beziehungsweise zeitunabhängig.

Gemäß zumindest einer Ausführungsform werden mittels eines weiteren Umfeldsensorsystems des weiteren Kraftfahrzeugs weitere Messdaten einer weiteren Umgebung des weiteren Kraftfahrzeugs erzeugt. Mittels einer weiteren Recheneinheit des weiteren Kraftfahrzeugs wird eine Existenz des Objekts basierend auf den weiteren Messdaten verifiziert.

Das weitere Kraftfahrzeug kann mittels des weiteren Umfeldsensorsystems je nach Position des weiteren Kraftfahrzeugs möglicherweise nicht dieselbe Information oder eine ebenso vollständige Information bezüglich des Objekts erfassen, wie es das Kraftfahrzeug kann. Die Existenz des Objekts kann aber gegebenenfalls verifiziert werden, vorausgesetzt, das Kraftfahrzeug befindet sich ausreichend nahe an dem Objekt.

Optional kann das weitere Kraftfahrzeug basierend auf den weiteren Messdaten, insbesondere mittels der weiteren Recheneinheit, die erste oder die zweite Relativposition oder eine weitere Relativposition des Objekts bezüglich der Landmarke bestimmen. Die Position der Landmarke kann beispielsweise aus den weiteren Messdaten mittels der Recheneinheit ermittelt werden oder aus weiteren Kartendaten einer weiteren Karte des weiteren Kraftfahrzeugs.

Gemäß einem weiteren unabhängigen Aspekt des verbesserten Konzepts wird ein Verfahren zur wenigstens teilweise automatischen Fahrzeugsteuerung angegeben. Dabei wird ein Informationssignal gemäß einer Ausführungsform eines Verfahrens zur Bereitstellung eines Informationssignals nach dem verbesserten Konzept bereitgestellt, wobei gemäß der Ausführungsform das Informationssignal mittels der Kommunikationsschnittstelle an das weitere Kraftfahrzeug und/oder das Servercomputersystem übertragen wird.

Das weitere Kraftfahrzeug wird mittels der weiteren Recheneinheit abhängig von dem Informationssignal oder abhängig von dem weiteren Informationssignal wenigstens teilweise automatisch gesteuert.

Zur wenigstens teilweise automatischen Steuerung des weiteren Kraftfahrzeugs kann die weitere Recheneinheit beispielsweise basierend auf der ersten und gegebenenfalls der zweiten Relativposition des Objekts sowie der Position der Landmarke, welche die weitere Recheneinheit basierend auf den weiteren Messdaten oder der weiteren Karte ermittelt, eine Anfahrtsstrategie zum Anfahren oder zum Passieren des Objekts bestimmen.

Entsprechend kann die weitere Recheneinheit oder ein von der weiteren Recheneinheit angesteuertes Steuergerät des weiteren Kraftfahrzeugs ein Brems-, Beschleunigungs- und/oder Lenkmanöver wenigstens teilweise automatisch einleiten.

Bei dem weiteren Kraftfahrzeug kann es sich in verschiedenen Ausführungsformen insbesondere um ein Kraftfahrzeug handeln, das Level 3, Level 4 oder Level 5 der SAE J3016-Klassifizierung entspricht. Hier und im Folgenden bezieht sich die Bezeichnung SAEJ J3016 auf die entsprechende Norm in der Version vom Juni 2018.

Gemäß zumindest einer Ausführungsform des Verfahrens zur wenigstens teilweise automatischen Fahrzeugsteuerung werden mittels der weiteren Recheneinheit weitere Koordinaten des Objekts in einem weiteren Kartenkoordinatensystem einer weiteren Karte des weiteren Kraftfahrzeugs abhängig von der ersten Relativposition bestimmt. Das weitere Kraftfahrzeug wird mittels der weiteren Recheneinheit basierend auf den weiteren Koordinaten des Objekts wenigstens teilweise automatisch gesteuert.

Dabei ermittelt die weitere Recheneinheit die erste Relativposition des Objekts insbesondere basierend auf dem Informationssignal oder dem weiteren Informationssignal und insbesondere basierend auf weiteren Kartendaten der weiteren Karte.

Gemäß zumindest einer Ausführungsform wird das weitere Kraftfahrzeug mittels der weiteren Recheneinheit basierend auf der dem Objekt zugeordneten Klasse wenigstens teilweise automatisch gesteuert.

Gemäß einem weiteren unabhängigen Aspekt des verbesserten Konzepts wird ein Kommunikationssystem zur Unterstützung einer wenigstens teilweise automatischen Fahrzeugsteuerung angegeben. Das Kommunikationssystem weist eine Recheneinheit für ein Kraftfahrzeug auf, eine Kommunikationsschnittstelle für das Kraftfahrzeug und ein Umfeldsensorsystem für das Kraftfahrzeug. Das Umfeldsensorsystem ist dazu eingerichtet, Messdaten einer Umgebung des Kraftfahrzeugs zu erzeugen. Die Recheneinheit ist dazu eingerichtet, basierend auf den Messdaten ein Objekt und eine Landmarke in der Umgebung zu identifizieren und basierend auf den Messdaten eine erste Relativposition des Objekts bezüglich der Landmarke zu bestimmen. Die Kommunikationsschnittstelle ist dazu eingerichtet, abhängig von der ersten Relativposition des Objekts ein Informationssignal zu erzeugen und dadurch bereitzustellen.

Gemäß zumindest einer Ausführungsform des Kommunikationssystems beinhaltet das Kommunikationssystem eine Karte für das Kraftfahrzeug. Die Recheneinheit ist dazu eingerichtet, basierend auf Kartendaten der Karte und den Messdaten einen Vergleich durchzuführen und das Objekt basierend auf einem Ergebnis des Vergleichs zu identifizieren.

Gemäß zumindest einer Ausführungsform des Kommunikationssystems weist das Kommunikationssystem eine weitere Kommunikationsschnittstelle für ein weiteres Kraftfahrzeug auf. Die Kommunikationsschnittstelle ist dazu eingerichtet, das Informationssignal an die weitere Kommunikationsschnittstelle zu übertragen und die weitere Kommunikationsschnittstelle ist insbesondere dazu eingerichtet, das Informationssignal von der Kommunikationsschnittstelle zu empfangen.

Gemäß zumindest einer Ausführungsform beinhaltet das Kommunikationssystem ein Servercomputersystem und die Kommunikationsschnittstelle ist dazu eingerichtet, das Informationssignal an das Servercomputersystem zu übertragen und das Servercomputersystem ist dazu eingerichtet, abhängig von dem Informationssignal ein weiteres Informationssignal zu erzeugen und an die weitere Kommunikationsschnittstelle zu übertragen. Die weitere Kommunikationsschnittstelle ist insbesondere dazu eingerichtet, das weitere Informationssignal von dem Servercomputersystem zu empfangen.

Gemäß zumindest einer Ausführungsform beinhaltet das Kommunikationssystem ein weiteres Umfeldsensorsystem für das weitere Kraftfahrzeug. Das weitere Umfeldsensorsystem ist dazu eingerichtet, weitere Messdaten einer weiteren Umgebung des weiteren Kraftfahrzeugs zu erzeugen. Die weitere Recheneinheit des weiteren Kraftfahrzeugs ist dazu eingerichtet, basierend auf den weiteren Messdaten eine Existenz des Objekts zu verifizieren.

Weitere Ausführungsformen des Kommunikationssystems nach dem verbesserten Konzept ergeben sich unmittelbar aus den verschiedenen Ausgestaltungsformen des Verfahrens zum Bereitstellen des Informationssignals nach dem verbesserten Konzept und umgekehrt sowie aus den verschiedenen Ausgestaltungsformen des Verfahrens zur wenigstens teilweise automatischen Fahrzeugsteuerung nach dem verbesserten Konzept und umgekehrt. Insbesondere ist das Kommunikationssystem nach dem verbesserten Konzept dazu eingerichtet, ein Verfahren zum Bereitstellen des Informationssignals und/oder ein Verfahren zur wenigstens teilweise automatischen Fahrzeugsteuerung nach dem verbesserten Konzept durchzuführen oder das Kommunikationssystem nach dem verbesserten Konzept führt ein solches Verfahren nach dem verbesserten Konzept durch.

Gemäß einem weiteren unabhängigen Aspekt des verbesserten Konzepts wird ein Computerprogramm mit Befehlen angegeben. Bei Ausführung des Computerprogramms durch ein Kommunikationssystem nach dem verbesserten Konzept, insbesondere durch die Recheneinheit des Kraftfahrzeugs, veranlassen die Befehle das Kommunikationssystem dazu, ein Verfahren zum Bereitstellen eines Informationssignals nach dem verbesserten Konzept durchzuführen.

Gemäß einem weiteren unabhängigen Aspekt des verbesserten Konzepts wird ein weiteres Computerprogramm mit weiteren Befehlen angegeben, wobei die weiteren Befehle bei Ausführung des weiteren Computerprogramms durch ein Kommunikationssystem nach dem verbesserten Konzept, das Kommunikationssystem, insbesondere die Recheneinheit des Kraftfahrzeugs und die weitere Recheneinheit des weiteren Kraftfahrzeugs, dazu veranlasst, ein Verfahren zum wenigstens teilweise automatischen Steuern eines Kraftfahrzeugs nach dem verbesserten Konzept durchzuführen.

Gemäß einem weiteren unabhängigen Aspekt des verbesserten Konzepts wird ein Computerprogrammsystem angegeben, welches das Computerprogramm und das weitere Computerprogramm nach dem verbesserten Konzept beinhaltet.

Gemäß einem weiteren unabhängigen Aspekt des verbesserten Konzepts wird ein computerlesbares Speichermedium angegeben, auf welchem ein Computerprogramm nach dem verbesserten Konzept und/oder ein weiteres Computerprogramm nach dem verbesserten Konzept gespeichert ist.

Gemäß einem weiteren unabhängigen Aspekt des verbesserten Konzepts wird ein Kraftfahrzeug mit einem Kommunikationssystem nach dem verbesserten Konzept angegeben.

Die Erfindung umfasst auch die Kombinationen der Merkmale der beschriebenen Ausführungsformen.

Im Folgenden ist ein Ausführungsbeispiel der Erfindung beschrieben. In den Figuren zeigen:
- Fig. 1: eine schematische Darstellung einer beispielhaften Ausführungsform eines Kommunikationssystems nach dem verbesserten Konzept;
- Fig. 2: eine Einhüllende einer Projektion eines Objekts auf eine Fahrbahn;
- Fig. 3: eine Einhüllende einer Projektion eines weiteren Objekts auf eine Fahrbahn;
- Fig. 4: eine schematische Darstellung verschiedener Aspekte einer beispielhaften Ausführungsform eines Verfahrens zum Bereitstellen eines Informationssignals nach dem verbesserten Konzept;
- Fig. 5: eine schematische Darstellung verschiedener Aspekte einer weiteren beispielhaften Ausführungsform eines Verfahrens zum Bereitstellen eines Informationssignals nach dem verbesserten Konzept; und
- Fig. 6: eine schematische Darstellung verschiedener Aspekte einer beispielhaften Ausführungsform eines Verfahrens zum wenigstens teilweise automatischen Fahrzeugsteuerung nach dem verbesserten Konzept.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

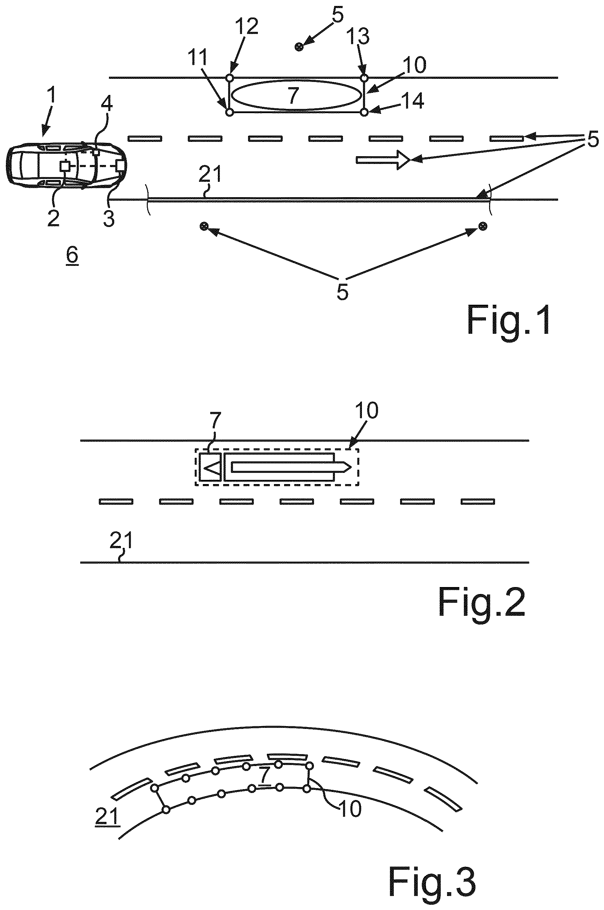

In Fig. 1 ist ein Kraftfahrzeug 1 gezeigt, das verschiedene Komponenten einer beispielhaften Ausführungsform eines Kommunikationssystems 6 nach dem verbesserten Konzept aufweist.

Das Kommunikationssystem 6 weist eine Recheneinheit 2 des Kraftfahrzeugs 1 auf, ein Umfeldsensorsystem 3, welches beispielsweise als Kamera, Radarsystem oder Lidarsystem ausgestaltet ist, des Kraftfahrzeugs 1 sowie eine Kommunikationsschnittstelle 4 des Kraftfahrzeugs 1, insbesondere zur V2V- und/oder V2X-Kommunikation.

Das Kraftfahrzeug 1 fährt beispielsweise auf einer Fahrspur einer Fahrbahn 21. Ein Objekt 7, beispielsweise eine Baustelle, ein stehender Lkw oder dergleichen, befindet sich ebenfalls auf der Fahrbahn 21, insbesondere auf einer anderen Fahrspur wie das Kraftfahrzeug 1.

Bei dem Objekt 7 handelt es sich insbesondere um eine Abweichung der Messdaten von den Kartendaten. Insbesondere befindet sich das Objekt 7 nicht in den Kartendaten oder an einer anderen Position als durch die Messdaten beschrieben.

Außer dem Objekt 7 befinden sich eine oder mehrere Landmarken 5 innerhalb des Sichtfelds des Umfeldsensorsystems 3. Bei den Landmarken 5 kann es sich beispielsweise um Schilderpfosten, Fahrbahnmarkierungen, Fahrbahnbegrenzungen, Laternenmasten oder dergleichen handeln.

Das Umfeldsensorsystem 3 kann Messdaten des Sichtfelds des Umfeldsensorsystems 3, insbesondere in Form von Kamerabildern oder Punktwolken von Abtastpunkten der Umgebung des Kraftfahrzeugs 1, erzeugen. Die Messdaten werden von dem Umfeldsensorsystem 3 beispielsweise an die Recheneinheit 2 übertragen. Die Recheneinheit 2 identifiziert beispielsweise basierend auf den Messdaten das Objekt 7 und wenigstens eine der Landmarken 5 in der Umgebung des Kraftfahrzeugs 1.

Die Recheneinheit 2 kann beispielsweise eine geometrische Figur 10 bestimmen, durch welche das Objekt 7 näherungsweise beschrieben und insbesondere eingeschlossen wird. Beispielsweise kann es sich bei der geometrischen Figur 10 um eine Einhüllende 10 einer Projektion des Objekts 7 auf die Fahrbahn 21 handeln. Zum Bestimmen der der Einhüllenden 10 bestimmt die Recheneinheit 2 beispielsweise mehrere Stützstellen 11, 12, 13, 14 der Einhüllenden 10. Die Stützstellen 11, 12, 13, 14 können beispielsweise Eckpunkte eines Polygons darstellen.

Beispielsweise kann eine der Stützstellen 11, 12, 13, 14 als Bezugspunkt 11 dienen, sodass die übrigen Stützstellen relativ zu dem Bezugspunkt 11 angegeben werden können.

Zusätzlich zu der Einhüllenden 10 können optional auch Höheninformationen des Objekts 7 mittels der Recheneinheit 2 basierend auf den Messdaten bestimmt werden. In Fig. 2 ist ein alternatives Objekt 7 mit entsprechender Einhüllender 10 dargestellt. Dabei kann es sich beispielsweise um einen stehenden Lkw mit einer überstehenden Ladung handeln. In Fig. 3 ist ein weiteres alternatives Objekt 7 mit einer entsprechenden Einhüllenden 10 dargestellt. Beispielsweise kann es sich dabei um eine Baustelle in einer Kurve der Fahrbahn 21 handeln.

Die Einhüllende 10 kann beispielsweise durch einen Polygonzug, wie etwa ein Rechteck beschrieben werden. Insbesondere kann die Einhüllende 10 durch die Stützstellen 11, 12, 13, 14, also Eckpunkte des Polygonzugs beschrieben werden. Im Falle einer gekrümmten Einhüllenden 10 können die Stützstellen 11, 12, 13, 14 die Krümmung approximieren, wie beispielsweise in Fig. 3 schematisch dargestellt. Die Krümmung kann beispielsweise auch durch mathematische Funktionen, beispielsweise durch Klothoiden, beschrieben werden.

Insbesondere können durch die Einhüllende 10 nicht beschreibbare oder nur schwierig beschreibbare Geometrieinformationen des Objekts 7, beispielsweise im Fall von Baustellen oder sonstigen sehr unregelmäßigen Objekten, approximiert werden, beispielsweise anhand von Karteninformationen, die in einer HD-Karte des Kraftfahrzeugs 1 gespeichert sind. Beispielsweise kann ein Baustellenverlauf am Straßenrand durch den Verlauf des Straßenrandes beschrieben werden, der beispielsweise in der HD-Karte gespeichert ist.

In verschiedenen Ausführungsformen kann die Recheneinheit 2 basierend auf den Messdaten eine semantische Klassifizierung von dynamischen und statischen Objekten 7, beispielsweise Hindernissen oder sonstigen Abweichungen von der Karte, vornehmen.

Koordinaten des identifizierten dynamischen oder statischen Objekts 7 können in Absolutkoordinaten angegeben werden oder in Relativkoordinaten zu einem Bezugspunkt. Unter Absolutkoordinaten können beispielsweise Koordinaten in einem Kartenkoordinatensystem der Karte verstanden werden, beispielsweise in einem geodätischen Koordinatensystem wie WGS84. Der Bezugspunkt 11 kann, wie beschrieben, beispielsweise eine Ecke der Einhüllenden 10 oder des Objekts 7 sein. Als alternativer Bezugspunkt kann auch die Absolutposition, also die Position im Kartenkoordinatensystem, des Kraftfahrzeugs 1 beziehungsweise des Umfeldsensorsystems 3 dienen.

Die Recheneinheit 2 kann beispielsweise Koordinaten der wenigstens einen Landmarke 5 in dem Kartenkoordinatensystem bestimmen. Die Landmarken 5 werden bei der landmarkenbasierten Ego-Lokalisierung des Kraftfahrzeugs 1 verwendet und sind in der HD-Karte insbesondere mit sehr hoher Genauigkeit gespeichert.

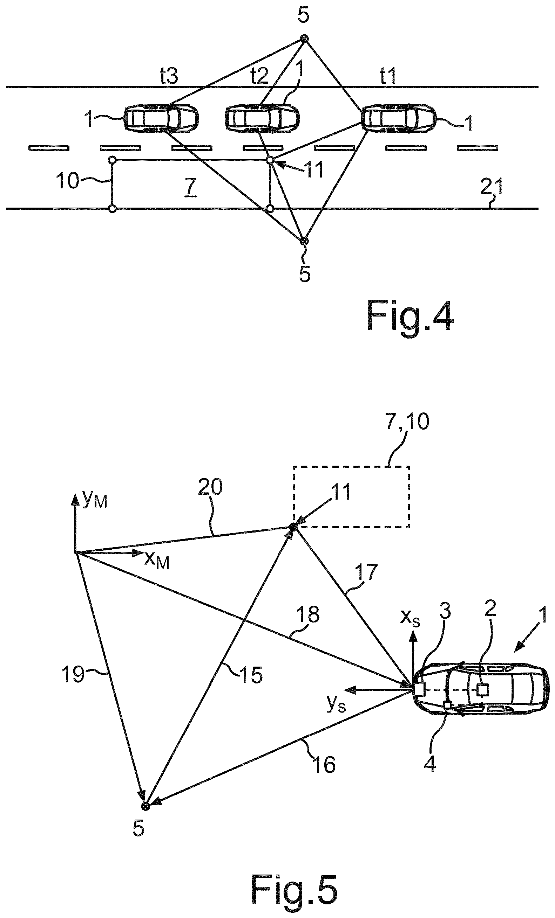

Die weitergehende Funktion des Kommunikationssystems 6 wird unter Bezug auf verschiedene Aspekte von Verfahren nach dem verbesserten Konzept genauer erläutert, insbesondere mit Bezug auf Fig. 4, Fig. 5 und Fig. 6.

In Fig. 4 ist das Kraftfahrzeug 1 auf der Fahrbahn 21 zu drei unterschiedlichen Zeitpunkten t1, t2, t3 schematisch dargestellt. Ein erster Punkt 11 der Einhüllenden 10 und optional weitere, insbesondere alle weiteren, Punkte 12, 13, 14 der Einhüllenden 10 werden während der Vorbeifahrt des Kraftfahrzeugs 1 an dem Objekt 7 beispielsweise wiederholt relativ zu der sich durch die Fahrt ändernden Position des Kraftfahrzeugs 1 vermessen.

Mit anderen Worten wird ein Ortsvektor 17 des Punktes 11 in einem Sensorkoordinatensystem mit Achsen X_{S}, Y_{S}, wie es in Fig. 5 dargestellt ist, berechnet. Bei dem Sensorkoordinatensystem handelt es sich insbesondere um ein starr mit dem Umfeldsensorsystem 3 verbundenes Koordinatensystem.

Außerdem ermittelt die Recheneinheit 2 während der Vorbeifahrt auch seine sich ändernden Positionen relativ zu mindestens einer Landmarke 5. Mit anderen Worten bestimmt die Recheneinheit 2 einen Ortsvektor 16 der Landmarke 5 in dem Sensorkoordinatensystem, wie in Fig. 5 dargestellt.

Die Recheneinheit 2 kann aus der Differenz der Ortsvektoren 16, 17, wie in Fig. 5 dargestellt, einen Verbindungsvektor 15 von der Landmarke 5 zu dem Punkt 11 berechnen. Der Verbindungsvektor 15 entspricht einer Relativposition des ersten Punktes 11 bezüglich der Landmarke 5.

In anderen Ausführungsformen kann die Recheneinheit 2 verschiedene Ortsvektoren in dem Kartenkoordinatensystem, welches in Fig. 5 mit der X-Achse X_{M} und der Y-Achse Y_{M} bezeichnet ist, berechnen. Beispielsweise kann die Recheneinheit 2 einen Ortsvektor 20 des Punktes 11 in dem Kartenkoordinatensystem als entsprechende Vektorsumme eines Ortsvektors 19 der Landmarke 5 in dem Kartenkoordinatensystem, des Ortsvektors 16 der Landmarke 5 in dem Sensorkoordinatensystem und des Ortsvektors 17 des Punktes 11 in dem Sensorkoordinatensystem bestimmen. Der Ortsvektor 19 der Landmarke 5 in dem Kartenkoordinatensystem ist beispielsweise in der HD-Karte gespeichert und kann so von der Recheneinheit 2 direkt abgerufen werden.

Ebenso kann die Recheneinheit 2 einen Ortsvektor 18 des Kraftfahrzeugs 1 beziehungsweise des Sensorsystems 3, insbesondere eines Koordinatenursprungs des Sensorkoordinatensystems, in dem Kartenkoordinatensystem als entsprechende Vektorsumme des Ortsvektors 19 der Landmarke 5 in dem Kartenkoordinatensystem und des Ortsvektors 16 der Landmarke 5 in dem Sensorkoordinatensystem berechnen.

Der Verbindungsvektor 15 von der Landmarke 5 zu dem Punkt 11 kann dann von der Recheneinheit 2 als entsprechende Vektorsumme des Ortsvektors 20 des Punktes 11 in dem Kartenkoordinatensystem, des Ortsvektors 18 des Umfeldsensorsystems 3 in dem Kartenkoordinatensystem und des Ortsvektors 16 der Landmarke 5 in dem Sensorkoordinatensystem berechnet werden.

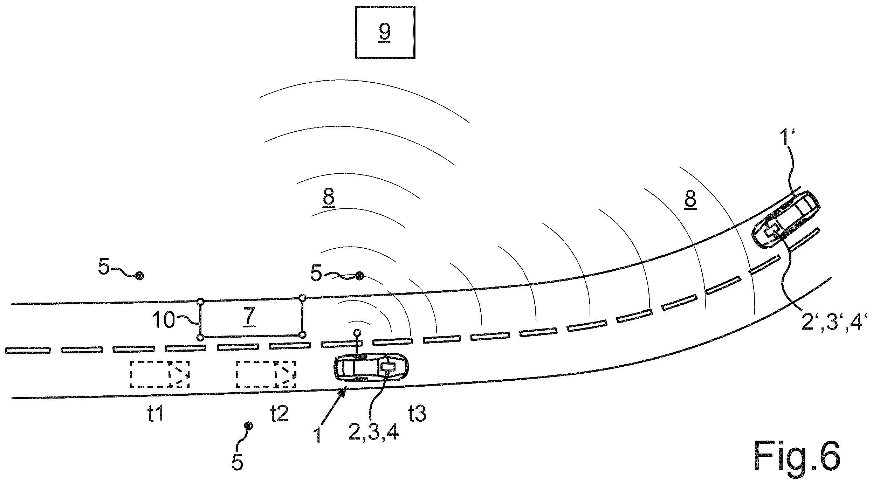

Die Kommunikationsschnittstelle 4 erzeugt basierend auf verschiedenen Informationen, insbesondere basierend auf dem Verbindungsvektor 15, ein Informationssignal 8, beispielsweise eine V2X-Nachricht, wie in Fig. 6 dargestellt. Optional kann das Informationssignal die dem Objekt zugeordnete Klasse, die Höheninformationen. Zudem kann das Informationssignal 8 auch die relativen Positionen der weiteren Punkte 12, 13, 14 der Einhüllenden 10 bezüglich des Punktes 11, bezüglich der Landmarke 5 oder bezüglich eines anderen Referenzpunktes beinhalten.

Beispielsweise kann das Informationssignal 8 auch den Ortsvektor 20 des Punktes 11 in dem Kartenkoordinatensystem beinhalten. Beispielsweise kann das Informationssignal 8 auch den Ortsvektor 19 der Landmarke 5 in dem Kartenkoordinatensystem beinhalten. Beispielsweise kann das Informationssignal 8 entsprechende Verbindungsvektoren von der Landmarke 5 zu einem oder mehreren der weiteren Punkte 12, 13, 14 der Einhüllenden 10 beinhalten.

Optional kann das Informationssignal auch entsprechende Ungenauigkeiten oder Konfidenzwerte für die genannten Vektoren und Positionen beinhalten.

Insbesondere kann die Kommunikationsschnittstelle 4 das Informationssignal 8 zum Zeitpunkt t3 oder später aussenden, insbesondere wenn für den ersten Punkt 11 mehrere entsprechende Verbindungsvektoren 15 aus unterschiedlichen Perspektiven bestimmt wurden, um eine höhere Genauigkeit bei der Bestimmung des Verbindungsvektors 15 zu gewährleisten.

Das beschriebene Darstellungskonzept kann auf alle Arten von dynamischen und statischen Objekten 7 angewandt werden.

Wie in Fig. 6 dargestellt, überträgt die Kommunikationsschnittstelle 4 das Informationssignal 8 an einen Backendserver 9 und/oder an ein Empfängerfahrzeug 1'. Der Backendserver 9 kann das Informationssignal 8 beziehungsweise ein davon abgeleitetes weiteres Informationssignal zentral an weitere nicht dargestellte Kraftfahrzeuge übermitteln.

Grundsätzlich hat das Empfängerfahrzeug 1' zunächst keine konkrete Information über die Korrektheit und Genauigkeit der Informationen aus dem Informationssignal 8. Daher kann beispielsweise mehrstufig vorgegangen werden, um eine möglichst hohe Sicherheit und Genauigkeit zu gewährleisten.

Ist das Empfängerfahrzeug 1' beispielsweise von dem Objekt 7 noch so weit entfernt, dass es dieses nicht selbst detektieren kann, beispielsweise mittels eines weiteren Umfeldsensorsystems 3' des Empfängerfahrzeugs 1' und einer weiteren Recheneinheit 2' des Empfängerfahrzeug 1', so kann das Empfängerfahrzeug 1' von der Korrektheit der V2X-Nachricht, also des Informationssignals 8, ausgehen. Basierend darauf kann die Recheneinheit wenigstens teilweise automatisch eine Anfahrstrategie zum Anfahren an das Objekt 7 planen und gegebenenfalls auch eine Strategie, das Objekt 7 zu passieren.

Kann das Empfängerfahrzeug 1' das Objekt 7 selbst detektieren, so kann es wenigstens seine Existenz verifizieren und jenen Teil der Informationen über das Objekt 7 evaluieren oder validieren, die es selbst erfassen kann.

Während sich das weitere Empfängerfahrzeug 1' dem Objekt 7 nähert, kann es beispielsweise geeignete Trajektorien abfahren, die einen möglichst großen Sichtbereich auf das Objekt 7 ermöglichen. Beispielsweise könnte das Empfängerfahrzeug 1' an Fahrstreifenränder fahren, um entsprechende Seiten des Objekts 7 besser detektieren zu können. Falls es die Verkehrssituation zulässt, könnte das weitere Empfängerfahrzeug 1' dazu auch zeitweise seine Fahrspur verlassen.

Die weitere Recheneinheit 2' des Empfängerfahrzeugs 1' kann basierend auf dem Informationssignal 8, insbesondere auf dem Verbindungsvektor 15 von der Landmarke 5 zu dem Punkt 11, das Empfängerfahrzeug 1' wenigstens teilweise automatisch steuern. Dies ist insbesondere vorteilhaft, wenn in einer weiteren Karte des Empfängerfahrzeug 1' das Objekt beziehungsweise die aktuelle Position des Objekts 7 noch nicht gespeichert ist. Aufgrund der Übertragung der Relativposition des Objekts 7, insbesondere des Punktes 11, bezüglich der Landmarke 5, kann das Empfängerfahrzeug 1' sein eigenes Kartenmaterial verwenden, um die wenigstens teilweise automatische Steuerung durchzuführen. Abweichungen von dem Kartenmaterial des Kraftfahrzeugs 1 wirken sich aufgrund der relativen Angabe durch den Verbindungsvektor 15 nicht negativ aus.

Eine genaue Vermessung der Länge des Objekts kann aus der Perspektive des sich nähernden Empfängerfahrzeug 1' gegebenenfalls nicht möglich sein. Jedoch können die mittels des weiteren Umfeldsensorsystems 3' gewonnenen Informationen können zur Plausibilisierung der Informationen des Informationssignals 8 dienen. Bei der Plausibilisierung kann beispielsweise die Wahrscheinlichkeit mittels der weiteren Recheneinheit 2' berechnet werden, dass die Informationen des Informationssignals 8 korrekt sind. Dazu können auch weitere V2X-Nachrichten weiterer Kraftfahrzeuge verwendet werden, die insbesondere dasselbe Objekt 7 beschreiben. Ist eine semantische Klassifizierung erfolgt, kann auch diese zur Plausibilisierung dienen, insbesondere weil dann möglicherweise typische Dimensionen oder maximal zulässige Dimensionen, etwa entsprechend der Straßenverkehrsvorschriften, bekannt sein können. Darauf aufbauend kann das Empfängerfahrzeug 1' seine Anfahrtsstrategie und gegebenenfalls seine Strategie zum Passieren des Objektes 7 aktualisieren.

Das Empfängerfahrzeug 1' kann bei der Integration des Objekts 7 in sein Umfeldmodell die entsprechenden Landmarkeninformationen verwenden. Dadurch werden die Einflüsse von Abweichungen der Karten im Kraftfahrzeug 1 und der weiteren Karte im Empfängerfahrzeug 1' minimiert. In jeweiligen Kartenkoordinatensystemen können die Koordinaten des Punktes 11 unterschiedlich sein. Insbesondere können Abweichungen im Bereich von einem oder mehreren Metern auftreten. Durch die Angabe der relativen Lage bezüglich der Landmarke 5, insbesondere bezüglich einer Mittellinie der Fahrbahn 21, bezüglich des Straßenrands, zu Laternenmasten, Strommasten, Schilderpfählen oder dergleichen, kann eine entsprechende Anpassung an die Karte des Empfängerfahrzeugs 1' erfolgen. Insbesondere können ein linearer Offset und eine Rotation kompensiert werden. Damit kann das Empfängerfahrzeug 1' das Objekt 7 mit geringerem Fehler in seine Karte beziehungsweise in sein Umfeldmodell eintragen. Bei geeignetem Abstand zum Objekt 7 kann das Empfängerfahrzeug 1' außerdem die Landmarken 5 in seiner eigenen Umgebung selbst detektieren. Dadurch wird die Integration in das Umfeldmodell genauer und zuverlässiger.

Nach dem verbesserten Konzept kann also eine wenigstens teilweise automatische Fahrzeugsteuerung mit reduziertem Fehler erzielt werden. Insbesondere können Assoziierungsfehler im Umfeldmodell des Empfängerfahrzeugs, also des teilweise automatisch gesteuerten Kraftfahrzeugs, reduziert werden. Die Zuordnung zu unterschiedlichen Karten kann verbessert werden. Zudem kann eine schrittweise Verifizierung und Plausibilisierung der entsprechenden Nachrichteninhalte erfolgen.

### Bezugszeichenliste

- 1: Kraftfahrzeug
- 1': Kraftfahrzeug
- 2: Recheneinheit
- 2': Recheneinheit
- 3: Umfeldsensorsystem
- 3': Umfeldsensorsystem
- 4: Kommunikationsschnittstelle
- 4`: Kommunikationsschnittstelle
- 5: Landmarke
- 6: Kommunikationssystem
- 7: Objekt
- 8: Informationssignal
- 9: Backendserver
- 10: Einhüllende
- 11: Punkt
- 12: Punkt
- 13: Punkt
- 14: Punkt
- 15: Verbindungsvektor
- 16: Ortsvektor
- 17: Ortsvektor
- 18: Ortsvektor
- 19: Ortsvektor
- 20: Ortsvektor
- 21: Fahrbahn

## Patentansprüche

1. Verfahren zur Bereitstellung eines Informationssignals (8) zur wenigstens teilweise automatischen Fahrzeugsteuerung, wobei
- mittels eines Umfeldsensorsystems (3) eines Kraftfahrzeugs (1) Messdaten einer Umgebung des Kraftfahrzeugs (1) erzeugt werden;
- mittels einer Recheneinheit (2) des Kraftfahrzeugs (1) basierend auf den Messdaten eine Landmarke (5) in der Umgebung identifiziert wird;
- basierend auf Kartendaten des Kraftfahrzeugs (1) und den Messdaten ein Vergleich durchgeführt wird und, um den Vergleich durchzuführen, mittels der Recheneinheit (2) die Messdaten oder von den Messdaten abhängige Daten mit den Kartendaten oder mit von den Kartendaten abhängigen Daten verglichen werden; und
- ein Objekt (7) in der Umgebung basierend auf einem Ergebnis des Vergleichs identifiziert wird;
- mittels der Recheneinheit (4) basierend auf den Messdaten eine erste Relativposition des Objekts (7) bezüglich der Landmarke (5) bestimmt wird; und
- mittels einer Kommunikationsschnittstelle (4) des Kraftfahrzeugs (1) das Informationssignal (8) abhängig von der ersten Relativposition erzeugt wird, um das Informationssignal (8) bereitzustellen.

2. Verfahren nach Anspruch 1,
**dadurch gekennzeichnet, dass**
- das Objekt (7) identifiziert wird, wenn eine durch einen oder mehrerer Toleranzbereiche definierte signifikante Abweichung der Messdaten von gemäß den Kartendaten erwarteten Daten vorliegt; und
- das Objekt (7) nicht identifiziert wird, wenn die signifikante Abweichung nicht vorliegt.

3. Verfahren nach einem der Ansprüche 1 oder 2,
**dadurch gekennzeichnet, dass** mittels der Recheneinheit (2)
- Koordinaten des Objekts (7) in einem vorgegebenen Sensorkoordinatensystem abhängig von den Messdaten bestimmt werden;
- Koordinaten der Landmarke (5) in dem Sensorkoordinatensystem abhängig von den Messdaten bestimmt werden; und
- die erste Relativposition abhängig von den Koordinaten des Objekts (7) und der Landmarke (5) in dem Sensorkoordinatensystem bestimmt wird.

4. Verfahren nach einem der Ansprüche 1 bis 3,
**dadurch gekennzeichnet, dass** mittels der Recheneinheit (2)
- Koordinaten des Objekts (7) in einem Kartenkoordinatensystem einer Karte des Kraftfahrzeugs (1) abhängig von den Messdaten bestimmt werden;
- Koordinaten des Umfeldsensorsystems (3) in dem Kartenkoordinatensystem abhängig von den Messdaten bestimmt werden; und
- die erste Relativposition abhängig von den Koordinaten des Objekts (7) und des Umfeldsensorsystems (3) in dem Kartenkoordinatensystem bestimmt wird.

5. Verfahren nach einem der Ansprüche 1 bis 4,
**dadurch gekennzeichnet, dass** mittels der Recheneinheit
- basierend auf den Messdaten eine geometrische Figur (10) zur näherungsweisen Beschreibung des Objekts (7) bestimmt wird; und
- eine Relativposition eines ersten Punkts (11) der geometrischen Figur (10) bezüglich der Landmarke (5) als die erste Relativposition des Objekts (7) bestimmt wird.

6. Verfahren nach einem der Ansprüche 1 bis 4,
**dadurch gekennzeichnet, dass**
- es sich bei der ersten Relativposition um Koordinaten eines ersten Punkts des Objekts (7) bezüglich eines Punkts der Landmarke (5) handelt;
- mittels der Recheneinheit (2) basierend auf den Messdaten eine zweite Relativposition des Objekts (7) bestimmt wird, wobei es sich bei der zweiten Relativposition um eine Relativposition eines zweiten Punkts des Objekts (7) bezüglich der Landmarke (5) oder bezüglich des ersten Punkts des Objekts (7) handelt;
- mittels der Kommunikationsschnittstelle (4) das Informationssignal (8) abhängig von der zweiten Relativposition erzeugt wird.

7. Verfahren nach einem der Ansprüche 1 bis 6,
**dadurch gekennzeichnet, dass**
- mittels der Recheneinheit (2) dem Objekt (7) basierend auf den Messdaten eine Klasse aus einer vorgegebenen Menge von Klassen zugeordnet wird; und
- mittels der Kommunikationsschnittstelle (4) das Informationssignal (8) abhängig von der dem Objekt (7) zugeordneten Klasse erzeugt wird.

8. Verfahren nach einem der Ansprüche 1 bis 7,
**dadurch gekennzeichnet, dass**
- das Informationssignal (8) mittels der Kommunikationsschnittstelle (4) an ein weiteres Kraftfahrzeug (1') übertragen wird; und/oder
- das Informationssignal (8) mittels der Kommunikationsschnittstelle (4) an ein Servercomputersystem (9) übertragen wird und ein weiteres Informationssignal mittels des Servercomputersystems (9) abhängig von dem Informationssignal (8) erzeugt und an das weitere Kraftfahrzeug (1') übertragen wird.

9. Verfahren nach Anspruch 8,
**dadurch gekennzeichnet, dass**
- mittels eines weiteren Umfeldsensorsystems (3') des weiteren Kraftfahrzeugs (1') weitere Messdaten einer weiteren Umgebung des weiteren Kraftfahrzeugs (1') erzeugt werden;
- mittels einer weiteren Recheneinheit (2') des weiteren Kraftfahrzeugs (1') basierend auf den weiteren Messdaten eine Existenz des Objekts (7) verifiziert wird.

10. Verfahren nach einem der Ansprüche 1 bis 9,
**dadurch gekennzeichnet, dass**
es sich bei dem Objekt (7) nicht um eine Landmarke handelt.

11. Verfahren zur wenigstens teilweise automatischen Fahrzeugsteuerung,
**dadurch gekennzeichnet, dass**
- ein Informationssignal (8) gemäß einem Verfahren nach einem der Ansprüche 8 oder 9 bereitgestellt wird;
- das weitere Kraftfahrzeug (1') mittels der weiteren Recheneinheit (2') abhängig von dem Informationssignal (8) oder dem weiteren Informationssignal wenigstens teilweise automatisch gesteuert wird.

12. Verfahren nach Anspruch 11,
**dadurch gekennzeichnet, dass**
- mittels der weiteren Recheneinheit (2') weitere Koordinaten des Objekts (7) in einem weiteren Kartenkoordinatensystem einer weiteren Karte des weiteren Kraftfahrzeugs (1') abhängig von der ersten Relativposition des Objekts bestimmt werden;
- das weitere Kraftfahrzeug (1') mittels der weiteren Recheneinheit (2') basierend auf den weiteren Koordinaten des Objekts (7) wenigstens teilweise automatisch gesteuert wird.

13. Kommunikationssystem zur Unterstützung einer wenigstens teilweise automatischen Fahrzeugsteuerung, das Kommunikationssystem (6) aufweisend eine Recheneinheit (2) für ein Kraftfahrzeug (1), eine Kommunikationsschnittstelle (4) für das Kraftfahrzeug (1) und ein Umfeldsensorsystem (3) für das Kraftfahrzeug, dazu eingerichtet, Messdaten einer Umgebung des Kraftfahrzeugs (1) zu erzeugen, wobei
- das Kommunikationssystem (6) eine Karte für das Kraftfahrzeug (1) beinhaltet;
- die Recheneinheit (2) dazu eingerichtet ist, basierend auf Kartendaten der Karte und den Messdaten einen Vergleich durchzuführen und, um den Vergleich durchzuführen, mittels der Recheneinheit (2) die Messdaten oder von den Messdaten abhängige Daten mit den Kartendaten oder mit von den Kartendaten abhängigen Daten zu vergleichen, und ein Objekt (7) in der Umgebung basierend auf einem Ergebnis des Vergleichs zu identifizieren;
- die Recheneinheit (2) dazu eingerichtet ist, basierend auf den Messdaten eine Landmarke (5) in der Umgebung zu identifizieren und basierend auf den Messdaten eine erste Relativposition des Objekts (7) bezüglich der Landmarke (5) zu bestimmen; und
- die Kommunikationsschnittstelle (4) dazu eingerichtet ist, abhängig von der ersten Relativposition ein Informationssignal (8) zu erzeugen.

14. Kommunikationssystem nach Anspruch 13,
**dadurch gekennzeichnet, dass** das Kommunikationssystem (6) eine weitere Kommunikationsschnittstelle (4') für ein weiteres Kraftfahrzeug (1') beinhaltet und
- die Kommunikationsschnittstelle (4) dazu eingerichtet ist, das Informationssignal (8) an die weitere Kommunikationsschnittstelle (4') zu übertragen; und/oder
- das Kommunikationssystem (6) ein Servercomputersystem (9) beinhaltet und die Kommunikationsschnittstelle (4) dazu eingerichtet ist, das Informationssignal (8) an das Servercomputersystem (9) zu übertragen und das Servercomputersystem (9) dazu eingerichtet ist, abhängig von dem Informationssignal (8) ein weiteres Informationssignal zu erzeugen und an die weitere Kommunikationsschnittstelle (4') zu übertragen.

## Claims

1. A method for providing an information signal (8) for at least partially automatic vehicle control, wherein
- measurement data of surroundings of a motor vehicle (1) is generated by an environmental sensor system (3) of the motor vehicle (1);
- a landmark (5) in the surroundings is identified based on the measurement data by a computing unit (2) of the motor vehicle (1);
- a comparison is performed based on map data of the motor vehicle (1) and the measurement data and, to perform the comparison, the measurement data or data depending on the measurement data is compared to the map data or to data depending on the map data by the computing unit (2); and
- an object (7) in the surroundings is identified based on a result of the comparison;
- a first relative position of the object (7) in relation to the landmark (5) is determined based on the measurement data by the computing unit (4); and
- the information signal (8) is generated depending on the first relative position by a communication interface (4) of the motor vehicle (1) to provide the information signal (8).

2. The method according to claim 1,
**characterized in that**
- the object (7) is identified if a significant deviation, defined by one or more tolerance ranges, of the measurement data from data expected according to the map data is present; and
- the object (7) is not identified if the significant deviation is not present.

3. The method according to any one of claims 1 or 2,
**characterized in that** by means of the computing unit (2)
- coordinates of the object (7) are determined in a predefined sensor coordinate system depending on the measurement data;
- coordinates of the landmark (5) are determined in the sensor coordinate system depending on the measurement data; and
- the first relative position is determined depending on the coordinates of the object (7) and the landmark (5) in the sensor coordinate system.

4. The method according to any one of claims 1 to 3,
**characterized in that** by means of the computing unit (2)
- coordinates of the object (7) are determined in a map coordinate system of a map of the motor vehicle (1) depending on the measurement data;
- coordinates of the environmental sensor system (3) are determined in the map coordinate system depending on the measurement data; and
- the first relative position is determined depending on the coordinates of the object (7) and of the environmental sensor system (3) in the map coordinate system.

5. The method according to any one of claims 1 to 4,
**characterized in that** by means of the computing unit
- a geometric figure (10) for approximately describing the object (7) is determined based on the measurement data; and
- a relative position of a first point (11) of the geometric figure (10) in relation to the landmark (5) is determined as the first relative position of the object (7).

6. The method according to any one of claims 1 to 4,
**characterized in that**
- the first relative position is given by coordinates of a first point of the object (7) in relation to a point of the landmark (5);
- a second relative position of the object (7) is determined based on the measurement data by the computing unit (2), wherein the second relative position is a relative position of a second point of the object (7) in relation to the landmark (5) or in relation to the first point of the object (7);
- the information signal (8) is generated depending on the second relative position by means of the communication interface (4).

7. The method according to any one of claims 1 to 6,
**characterized in that**
- a class of a predefined set of classes is associated with the object (7) based on the measurement data by the computing unit (2); and
- the information signal (8) is generated depending on the class associated with the object (7) by the communication interface (4).

8. The method according to any one of claims 1 to 7,
**characterized in that**
- the information signal (8) is transmitted to a further motor vehicle (1') by means of the communication interface (4); and/or
- the information signal (8) is transmitted to a server computer system (9) by the communication interface (4) and a further information signal is generated depending on the information signal (8) and transmitted to the further motor vehicle (1') by the server computer system (9).

9. The method according to claim 8,
**characterized in that**
- further measurement data of further surroundings of the further motor vehicle (1') is generated by a further environmental sensor system (3') of the further motor vehicle (1');
- an existence of the object (7) is verified based on the further measurement data by a further computing unit (2') of the further motor vehicle (1').

10. The method according to any one of claims 1 to 9,
**characterized in that**
the object (7) is not a landmark.

11. A method for at least partially automatic vehicle control,
**characterized in that**
- an information signal (8) is provided according to a method according to any one of claims 8 or 9;
- the further motor vehicle (1') is at least partially automatically controlled depending on the information signal (8) or the further information signal by the further computing unit (2').

12. The method according to claim 11,
**characterized in that**
- further coordinates of the object (7) in a further map coordinate system of a further map of the further motor vehicle (1') is determined depending on the first relative position of the object by the further computing unit (2');
- the further motor vehicle (1') is at least partially automatically controlled based on the further coordinates of the object (7) by the further computing unit (2').

13. A communication system for supporting an at least partially automatic vehicle control, the communication system (6) comprising a computing unit (2) for a motor vehicle (1), a communication interface (4) for the motor vehicle (1) and an environmental sensor system (3) for the motor vehicle, configured to generate measurement data of surroundings of the motor vehicle (1), wherein
- the communication system (6) includes a map for the motor vehicle (1);
- the computing unit (2) is configured to perform a comparison based on map data of the map and the measurement data, and, to perform the comparison, to compare the measurement data or data depending on the measurement data to the map data or to data depending on the map data and to identify an object (7) in the surroundings based on a result of the comparison;
- the computing unit (2) is configured to identify a landmark (5) in the surroundings based on the measurement data and to determine a first relative position of the object (7) in relation to the landmark (5) based on the measurement data; and
- the communication interface (4) is configured to generate an information signal (8) depending on the first relative position.

14. The communication system according to claim 13,
**characterized in that** the communication system (6) includes a further communication interface (4') for a further motor vehicle (1') and
- the communication interface (4) is configured to transmit the information signal (8) to the further communication interface (4'); and/or
- the communication system (6) includes a server computer system (9) and the communication interface (4) is configured to transmit the information signal (8) to the server computer system (9) and the server computer system (9) is configured to generate a further information signal depending on the information signal (8) and to transmit it to the further communication interface (4').

## Revendications

1. Procédé pour fournir un signal d'information (8) destiné à une commande de véhicule au moins partiellement automatique,
- des données de mesure d'un environnement du véhicule automobile (1) étant générées au moyen d'un système de capteur d'environnement (3) d'un véhicule automobile (1) ;
- un repère (5) dans l'environnement étant identifié au moyen d'une unité de calcul (2) du véhicule automobile (1) sur la base des données de mesure ;
- une comparaison étant effectuée sur la base de données cartographiques du véhicule automobile (1) et des données de mesure et, en vue d'effectuer la comparaison, les données de mesure ou des données dépendantes des données de mesure étant comparées au moyen de l'unité de calcul (2) aux données cartographiques ou à des données dépendantes des données cartographiques ; et
- un objet (7) dans l'environnement étant identifié sur la base d'un résultat de la comparaison ;
- une première position relative de l'objet (7) par rapport au repère (5) étant déterminée au moyen de l'unité de calcul (4) sur la base des données de mesure ; et
- le signal d'information (8) étant généré en fonction de la première position relative au moyen d'une interface de communication (4) du véhicule automobile (1) afin de fournir le signal d'information (8).

2. Procédé selon la revendication 1,
**caractérisé en ce que**
- l'objet (7) est identifié lorsqu'il existe un écart significatif, défini par une ou plusieurs plages de tolérance, entre les données mesurées et les données attendues selon les données cartographiques ; et
- l'objet (7) n'est pas identifié lorsque l'écart significatif n'existe pas.

3. Procédé selon l'une des revendications 1 ou 2,
**caractérisé en ce que**, au moyen de l'unité de calcul (2)
- les coordonnées de l'objet (7) sont déterminées dans un système de coordonnées de capteur prédéfini en fonction des données de mesure ;
- les coordonnées du repère (5) dans le système de coordonnées de capteur sont déterminées en fonction des données de mesure ; et
- la première position relative est déterminée en fonction des coordonnées de l'objet (7) et du repère (5) dans le système de coordonnées de capteur.

4. Procédé selon l'une des revendications 1 à 3,
**caractérisé en ce que**, au moyen de l'unité de calcul (2)
- les coordonnées de l'objet (7) sont déterminées dans un système de coordonnées cartographiques d'une carte du véhicule automobile (1) en fonction des données de mesure ;
- les coordonnées du système de capteur d'environnement (3) sont déterminées dans le système de coordonnées cartographiques en fonction des données de mesure ; et
- la première position relative est déterminée en fonction des coordonnées de l'objet (7) et du système de capteur d'environnement (3) dans le système de coordonnées cartographiques.

5. Procédé selon l'une des revendications 1 à 4,
**caractérisé en ce que**, au moyen de l'unité de calcul
- une figure géométrique (10) est déterminée à partir des données de mesure en vue d'une description approximative de l'objet (7) ; et
- une position relative d'un premier point (11) de la figure géométrique (10) par rapport au repère (5) est déterminée en tant que première position relative de l'objet (7).

6. Procédé selon l'une des revendications 1 à 4,
**caractérisé en ce que**
- la première position relative correspond aux coordonnées d'un premier point de l'objet (7) par rapport à un point du repère (5) ;
- une deuxième position relative de l'objet (7) est déterminée au moyen de l'unité de calcul (2) sur la base des données de mesure, la deuxième position relative étant une position relative d'un deuxième point de l'objet (7) par rapport au repère (5) ou par rapport au premier point de l'objet (7) ;
- au moyen de l'interface de communication (4), le signal d'information (8) est généré en fonction de la deuxième position relative.

7. Procédé selon l'une des revendications 1 à 6,
**caractérisé en ce que**
- au moyen de l'unité de calcul (2), une classe issue d'un ensemble prédéfini de classes est attribuée à l'objet (7) sur la base des données de mesure ; et
- au moyen de l'interface de communication (4), le signal d'information (8) est généré en fonction de la classe attribuée à l'objet (7).

8. Procédé selon l'une des revendications 1 à 7,
**caractérisé en ce que**
- le signal d'information (8) est transmis à un véhicule automobile supplémentaire (1') au moyen de l'interface de communication (4) ; et/ou
- le signal d'information (8) est transmis à un système informatique serveur (9) au moyen de l'interface de communication (4) et un signal d'information supplémentaire est généré au moyen du système informatique serveur (9) en fonction du signal d'information (8) et transmis au véhicule automobile supplémentaire (1').

9. Procédé selon la revendication 8,
**caractérisé en ce que**
- des données de mesure supplémentaires d'un environnement du véhicule automobile supplémentaire (1') sont générées au moyen d'un système de capteur d'environnement supplémentaire (3') du véhicule automobile supplémentaire (1') ;
- une existence de l'objet (7) est vérifiée au moyen d'une unité de calcul supplémentaire (2') du véhicule automobile supplémentaire (1') sur la base des données de mesure supplémentaires.

10. Procédé selon l'une des revendications 1 à 9,
**caractérisé en ce que**
l'objet (7) n'est pas un repère.

11. Procédé de commande de véhicule au moins partiellement automatique,
**caractérisé en ce que**
- un signal d'information (8) est fourni conformément à un procédé selon l'une des revendications 8 ou 9 ;
- le véhicule automobile supplémentaire (1') est commandé au moins partiellement de manière automatique au moyen de l'unité de calcul supplémentaire (2') en fonction du signal d'information (8) ou du signal d'information supplémentaire.

12. Procédé selon la revendication 11,
**caractérisé en ce que**
- des coordonnées supplémentaires de l'objet (7) sont déterminées au moyen de l'unité de calcul supplémentaire (2') dans un système de coordonnées cartographiques supplémentaire d'une carte supplémentaire du véhicule automobile supplémentaire (1') en fonction de la première position relative de l'objet ;
- le véhicule automobile supplémentaire (1') est commandé de manière au moins partiellement automatique au moyen de l'unité de calcul supplémentaire (2') sur la base des coordonnées supplémentaires de l'objet (7).

13. Système de communication destiné à assister une commande de véhicule au moins partiellement automatique, le système de communication (6) possédant une unité de calcul (2) pour un véhicule automobile (1), une interface de communication (4) pour le véhicule automobile (1) et un système de capteur d'environnement (3) pour le véhicule automobile, conçu pour générer des données de mesure d'un environnement du véhicule automobile (1),
- le système de communication (6) comprenant une carte pour le véhicule automobile (1) ;
- l'unité de calcul (2) étant conçue pour effectuer une comparaison sur la base de données cartographiques de la carte et des données de mesure et, en vue d'effectuer la comparaison, comparer, au moyen de l'unité de calcul (2), les données de mesure ou des données dépendantes des données de mesure avec les données cartographiques ou avec des données dépendantes des données cartographiques, et identifier un objet (7) dans l'environnement sur la base d'un résultat de la comparaison ;
- l'unité de calcul (2) étant conçue pour identifier un repère (5) dans l'environnement sur la base des données de mesure et pour déterminer une première position relative de l'objet (7) par rapport au repère (5) sur la base des données de mesure ; et
- l'interface de communication (4) étant conçue pour générer un signal d'information (8) en fonction de la première position relative.

14. Système de communication selon la revendication 13, **caractérisé en ce que** le système de communication (6) comprend une interface de communication supplémentaire (4') pour un véhicule automobile supplémentaire (1') et
- l'interface de communication (4) est conçue pour transmettre le signal d'information (8) à l'interface de communication supplémentaire (4') ; et/ou
- le système de communication (6) comprend un système informatique serveur (9) et l'interface de communication (4) est conçue pour transmettre le signal d'information (8) au système informatique serveur (9) et le système informatique serveur (9) est conçu pour générer un signal d'information supplémentaire en fonction du signal d'information (8) et pour le transmettre à l'interface de communication supplémentaire (4').
